# EUROPEAN PATENT SPECIFICATION

(11) **EP 1 502 205 B1**
(45) Date of publication and mention of the grant of the patent: **15.12.2010**
(21) Application number: 01945997.3
(22) Date of filing: 25.05.2001
(51) Int. Cl.: G06F 17/30

(54) **HIERARCHICAL DATA-DRIVEN NAVIGATION SYSTEM AND METHOD FOR INFORMATION RETRIEVAL**
HIERARCHISCHES DATENGESTEUERTES NAVIGATIONSSYSTEM UND VERFAHREN FÜR INFORMATIONSWIDERAUFFINDUNG
SYSTEME DE NAVIGATION HIERARCHIQUE GUIDE PAR DONNEES ET PROCEDE D'EXTRACTION DE DONNEES

(43) Date of publication of application: 02.02.2005
(73) Proprietor: Endeca Technologies, Inc., Cambridge, MA 02142 (US)
(72) Inventor: FERRARI, Adam, J., Cambridge, MA 02138 (US); GOURLEY, David, Boston, Massachusetts 02116 (US); JOHNSON, Keith, Newton, MA 02459 (US); KNABE, Frederick, C., Boston, MA 02115 (US); TUNKELANG, Daniel, New York, NY 10023 (US); WALTER, John, S., Brookline, MA 02446-4033 (US)
(74) Representative: Palmer, Jonathan R.
(86) International application number: PCT/US2001/017046
(87) International publication number: WO 2002/097671

(56) References cited:
- US-A- 5 983 220
- US-A- 6 094 650
- BAEZA-YATES R A ET AL: "New approaches to information management: attribute-centric data systems" PROCEEDINGS SEVENTH INTERNATIONAL SYMPOSIUM ON STRING PROCESSING AND INFORMATION RETRIEVAL. SPIRE 2000, PROCEEDINGS OF SPIRE'2000 - STRING PROCESSING AND INFORMATION RETRIEVAL, A CURUNA, SPAIN, 27-29 SEPT. 2000, pages 17-27, XP002210036 2000, Los Alamitos, CA, USA, IEEE Comput. Soc, USA ISBN: 0-7695-0746-8
- POLLITT A S ET AL: "HIBROWSE for bibliographic databases" JOURNAL OF INFORMATION SCIENCE, 1994, UK, vol. 20, no. 6, pages 413-426, XP008005780 ISSN: 1352-7460
- POLLITT A S ET AL: "VIEW-BASED SEARCHING SYSTEMS - PROGRESS TOWARDS EFFECTIVE DISINTERMEDIATION" ONLINE INFORMATION. INTERNATIONAL ONLINE INFORMATION MEETINGPROCEEDINGS, XX, XX, 3 December 1996 (1996-12-03), pages 433-445, XP008005789

## Description

### 1. Field of the Invention

The present invention generally relates to information navigation systems and search engines.

### 2. Background of the Invention

Information retrieval from a database of information is an increasingly challenging problem, particularly on the World Wide Web (WWW), as increased computing power and networking infrastructure allow the aggregation of large amounts of information and widespread access to that information. A goal of the information retrieval process is to allow the identification of materials of interest to users.

As the number of materials that users may search increases, identifying materials relevant to the search becomes increasingly important, but also increasingly difficult. Challenges posed by the information retrieval process include providing an intuitive, flexible user interface and completely and accurately identifying materials relevant to the user's needs within a reasonable amount of time. The information retrieval process comprehends two interrelated technical aspects, namely, information organization and access.

Current information navigation systems usually follow one of three paradigms. One type of information navigation system employs a database query system. In a typical database query system, a user formulates a structured query by specifying values for fixed data fields, and the system enumerates the documents whose data fields contain those values. PriceSCAN.com uses such an interface, for example. Generally, a database query system presents users with a form-based interface, converts the form input into a query in a formal database language, such as SQL, and then executes the query on a relational database management system. Disadvantages of typical query-based systems include that they allow users to make queries that return no documents and that they offer query modification options that lead only to further restriction of the result set (the documents that correspond to the user's search specifications), rather than to expansion or extension of the result set.

A second type of information navigation system is a free-text search engine. In a typical free-text search engine, the user enters an arbitrary text string, often in the form of a Boolean expression, and the system responds by enumerating the documents that contain matching text. Google.com, for example, includes a free-text search engine. Generally a free-text search engine presents users with a search form, often a single line, and processes queries using a precomputed index. Generally this index associates each document with a large portion of the words contained in that document, without substantive consideration of the document's content. Accordingly, the result set is often a voluminous, disorganized list that mixes relevant and irrelevant documents. Although variations have been developed that attempt to determine the objective of the user's query and to provide relevance rankings to the result set or to otherwise narrow or organize the result set, these systems are limited and unreliable in achieving these objectives.

A third type of information navigation system is a tree-based directory. In a tree-based directory, the user generally starts at the root node of the tree and specifies a query by successively selecting refining branches that lead to other nodes in the tree. Shopping.yahoo.com uses a tree-based directory, for example. In a typical implementation, the hard-coded tree is stored in a data structure, and the same or another data structure maps documents to the node or nodes of the tree where they are located. A particular document is typically accessible from only one or, at most, a few, paths through the tree. The collection of navigation states is relatively static-while documents are commonly added to nodes in the directory, the structure of the directory typically remains the same. In a pure tree-based directory, the directory nodes are arranged such that there is a single root node from which all users start, and every other directory node can only be reached via a unique sequence of branches that the user selects from the root node. Such a directory imposes the limitation that the branches of the tree must be navigationally disjoint-even though the way that documents are assigned to the disjoint branches may not be intuitive to users. It is possible to address this rigidity by adding additional links to convert the tree to a directed acyclic graph. Updating the directory structure remains a difficult task, and leaf nodes are especially prone to end up with large numbers of corresponding documents.

In all of these types of navigation systems, it may be difficult for a user to revise a query effectively after viewing its result set. In a database query system, users can add or remove terms from the query, but it is generally difficult for users to avoid underspecified queries (i.e. too many results) or overspecified queries (i.e. no results). The same problem arises in free-text search engines. In tree-based directories, the only means for users to revise a query is either to narrow it by selecting a branch or to generalize it by backing up to a previous branch.

Various other systems for information retrieval are also available. For example, U.S. Patents Nos. 5,715,444 and 5,983,219 to Danish et al., both entitled "Method and System for Executing a Guided Parametric Search", disclose an interface for identifying a single item from a family of items. The interface provides users with a set of lists of features present in the family of items and identifies items that satisfy selected features.

Information Systems Vol. 18, No 4 pp 215 - 232, 1993, Weiland and Shneiderman, discloses a graphical query interface based on aggregation/generalisation hierarchies. The nodes of the aggregation hierarchy are mapped to Boolean intersection operations, while the nodes of the generalisation hierarchy are mapped to Boolean union operations.

### 3. Summary of the Invention

The invention provides a navigation system for a set of materials as set out in claim 1, and a method for enabling a user to browse a set of materials as set out in claim 19.

The described hierarchical, data-driven information navigation system and method, enables the navigation of a collection of documents or other materials using certain common attributes associated with those materials. The navigation system interface allows the user to select values for the attributes associated with the materials in the current navigation state and returns the materials that correspond to the user's selections. This navigation mode is enabled by associating terms (attribute-value pairs) with the documents, defining a set of hierarchical refinement relationships (i.e. a partial order) among the terms, and providing a guided navigation mechanism based on the association of terms with documents and the relationships among the terms.

The embodiments include several components and features relating to a hierarchical data-driven navigation system. Among these are a user interface, a knowledge base, a process for generating and maintaining the knowledge base, a navigable data structure and method for generating the data structure, WWW-based applications of the system, and methods of implementing the system. Although the invention is described herein primarily with reference to a WWW-based system for navigating a product database, it should be understood that a similar navigation system could be employed in any database context where materials may be associated with terms and users can identify materials of interest by way of those terms.

The embodiments use a knowledge base of information regarding the collection of materials to formulate and to adapt the interface to guide the user through the collection of navigation states by providing relevant navigation options. The knowledge base includes an enumeration of attributes relevant to the materials, a range of values for each attribute, and a representation of the partial order that relates terms (the attribute-value pairs). Attribute-value pairs for materials relating to entertainment, for example, may be *Products*: *Movies* and *Director. Spike Lee.* (Attribute-value pairs are represented throughout this specification in this *Attribute: Value* format; navigation states are represented as bracketed sets of attribute-value pairs.) The knowledge base also includes a classification mapping that associates each item in the collection of materials with a set of terms that characterize that item.

The knowledge base is typically organized by domains, which are sets of materials that conform to natural groupings. Preferably, a domain is chosen such that a manageable number of attributes suffice to effectively distinguish and to navigate among the materials in that domain. The knowledge base preferably includes a characterization of each domain, which might include rules or default expectations concerning the classification of documents in that domain. A particular item may be in more than one domain.

The embodiments include a user interface for navigation. The user interface preferably presents the user's navigation state as a set of terms organized by attribute. For a given set of terms, the user interface presents materials that are associated with those terms and presents relevant navigation options for narrowing or for generalizing the navigation state. In one aspect, users navigate through the collection of materials by selecting and deselecting terms.

In one aspect, the user interface responds immediately to the selection or the deselection of terms, rather than waiting for the user to construct and to submit a comprehensive query composed of multiple terms. Once a query has been executed, the user may narrow the navigation state by selecting additional terms, or by refining existing terms. Alternatively, the user may broaden the navigation state by deselecting terms that have already been selected or by generalizing the terms. In preferred embodiments, the user may broaden the navigation state by deselecting terms in an order different from that in which they were selected. For example, a user could start at {*Products: Movies*}*,* narrow by selecting an additional term to {*Products: Movies; Genre: Drama*}, narrow again to {*Products: Movies; Genre: Drama; Director: Spike Lee*}, and then broaden by deselecting a term to {*Products: Movies; Director: Spike Lee*}.

In another aspect , the user interface allows users to use free-text search to find terms of interest. In another aspect , the user interface also allows users to use free-text search on descriptive information associated with the materials.

In another aspect , the user interface presents users with context-dependent navigation options for narrowing the navigation state. The user interface does not present the user with terms whose selection would correspond to no documents in the resulting navigation state. The user interface presents the user only with terms that are associated with at least one item in the present navigation state. Also, the user interface presents new navigation options as they become relevant. The knowledge base may contain rules that determine when particular attributes or terms are made available to users for navigation.

In another aspect for example, when the materials correspond to products available for purchase from various sources-the knowledge base includes a catalog of canonical representations that have been aggregated from the materials.

In another aspect , the knowledge base may include definitions of stores, sets of materials that are grouped to be searchable at one time. A store may include documents from one or more domains. An item may be assigned to more than one store. The knowledge base may also include rules to customize navigation for particular stores.

In another aspect , the knowledge base is developed through a multi-stage, iterative process. Workflow management allocates resources to maximize the efficiency of generating and of maintaining the knowledge base.

The knowledge base is used to generate data structures that support navigation through a collection of materials. In one aspect , the navigation system consists of a hierarchy (i.e., a partial order) of navigation states that map sets of terms to the sets of materials with which those terms are associated. In another aspect , the navigation states are related by transitions corresponding to terms used to narrow from one navigation state to another. The navigation states may be fully or partially precomputed, or may be entirely computed at run-time.

### 4. Brief Description of the Drawings

The invention, including these and other features thereof, may be more fully understood from the following description and accompanying drawings, in which:
Figure 1 is a view of a user interface to a navigation system in accordance with an embodiment of the present invention.
Figure 2 is a view of the user interface of Figure 1, showing a drop-down pick list of navigable terms.
Figure 3 is a view of the user interface of Figure 1, showing a navigation state.
Figure 4 is a view of the user interface of Figure 1, showing a navigation state.
Figure 5 is a view of the user interface of Figure 1, showing a navigation state.
Figure 6 is a view of the user interface of Figure 1, showing a navigation state.
Figure 7 is a view of the user interface of Figure 1, showing a navigation state.
Figure 8 is a view of the user interface of Figure 1, showing a navigation state.
Figure 9 is a view of the user interface of Figure 1, showing the result of a free-text search for terms.
Figure 10 is a view of the user interface of Figure 1, showing information about a particular document.
Figures 11A-C are representative examples of how the range of values for an attribute could be partially ordered in accordance with an embodiment of the present invention.
Figure 12 is a block diagram of a process for collecting and classifying documents in accordance with an embodiment of the present invention.
Figure 13 is a table illustrating how a set of documents may be classified in accordance with an embodiment of the present invention.
Figure 14 is a representative partial order of navigation states in accordance with an embodiment of the present invention.
Figure 15 is a block diagram of a process for precomputing a navigation state in accordance with an embodiment of the present invention.

### 5. Detailed Description of the Preferred Embodiments

### User Interface

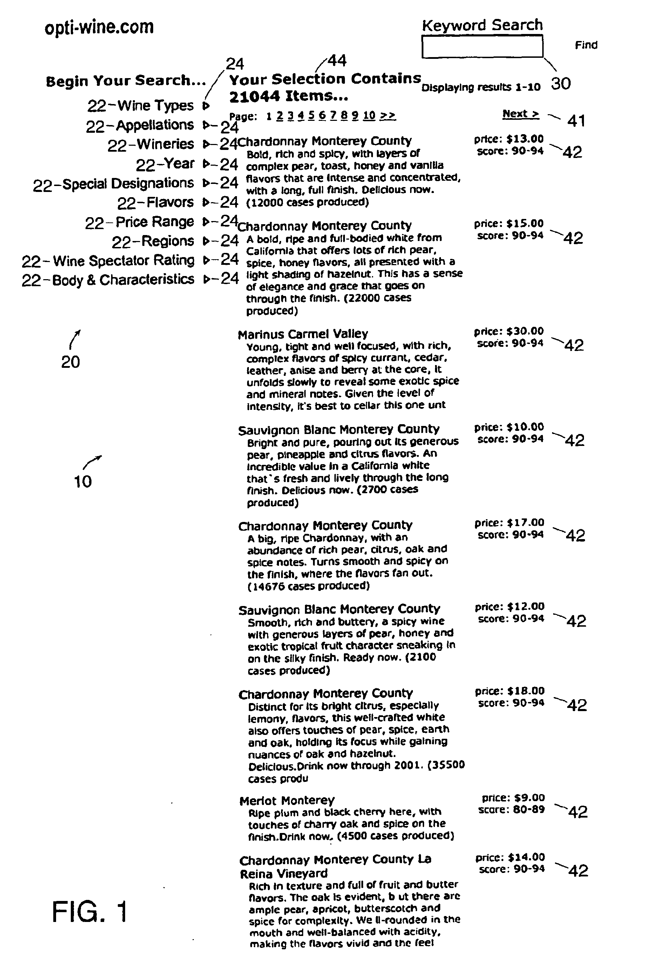

In accordance with one embodiment of the present invention, Figure 1 shows a user interface 10 to a hierarchical, data-driven navigation system. The navigation system operates on a collection of documents defined in a knowledge base. As is shown, the user is preferably presented with at least two alternative methods of using the navigation system: (1) by selecting terms to navigate through the collection of documents, or (2) by entering a desired keyword in a search box.

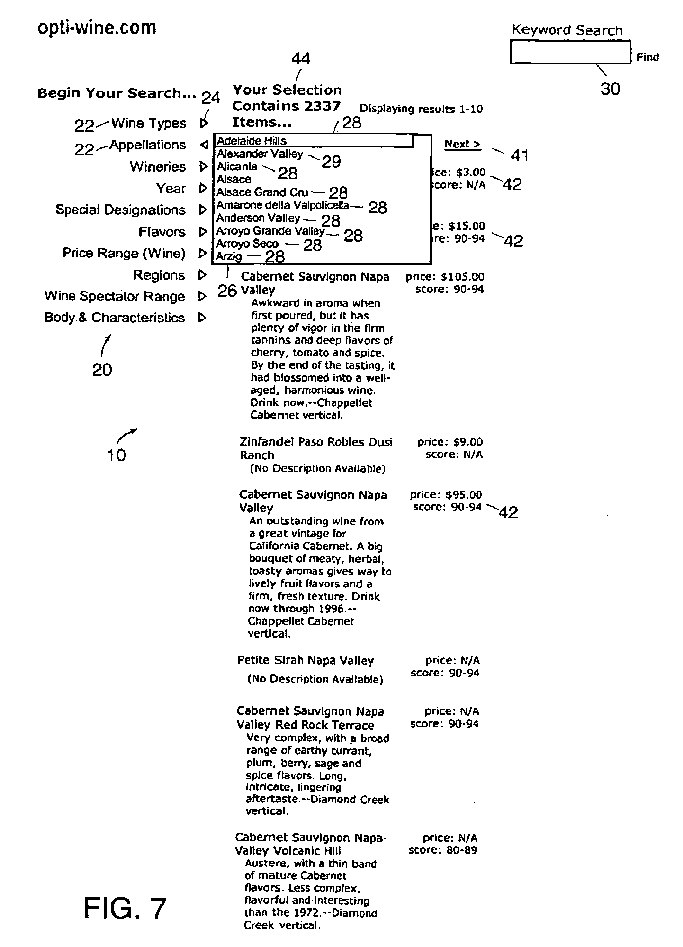

The navigation system preferably organizes documents by domain. In accordance with one embodiment of the present invention, the user interface 10 shown in Figures 1-10 is operating on a set of documents that are part of a wine domain. Preferably, a domain defines a portion of the collection of documents that reflects a natural grouping. Generally, the set of attributes used to classify documents in a domain will be a manageable subset of the attributes used to classify the entire collection of documents. A domain definition may be a type of product, e.g., wines or consumer electronics. A domain may be divided into subdomains to further organize the collection of documents. For example, there can be a consumer electronics domain that is divided into the subdomains of televisions, stereo equipment, etc. Documents may correspond to goods or services.

The user interface may allow users to navigate in one domain at a time. Alternatively, the user interface may allow the simultaneous navigation of multiple domains, particularly when certain attributes are common to multiple domains.

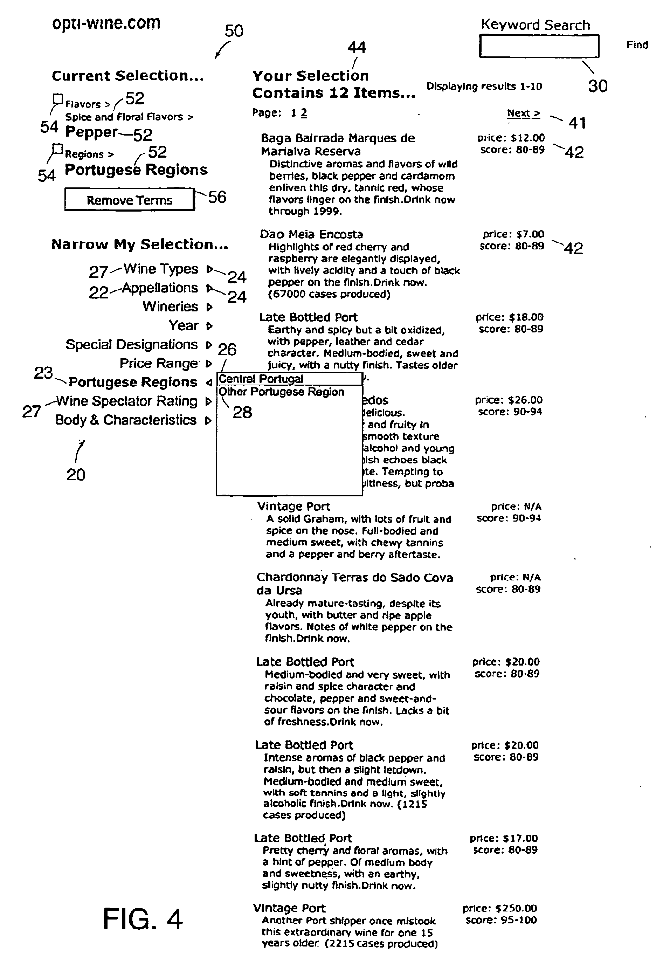

The user interface allows the user to navigate through a collection of navigation states. Each state is composed of a set of terms and of the set of documents associated with those terms. Users navigate through the collection of navigation states by selecting and deselecting terms to obtain the navigation state corresponding to each set of selected terms. Preferably, as in Figure 4, the user interface 10 presents a navigation state by displaying both the list 50 of terms 52 and a list 41 of some or all of the documents 42 that correspond to that state. Preferably, the user interface presents the terms 52 of the navigation state organized by attribute. Preferably, the initial navigation state is a root state that corresponds to no term selections and, therefore, to all of the documents in the collection.

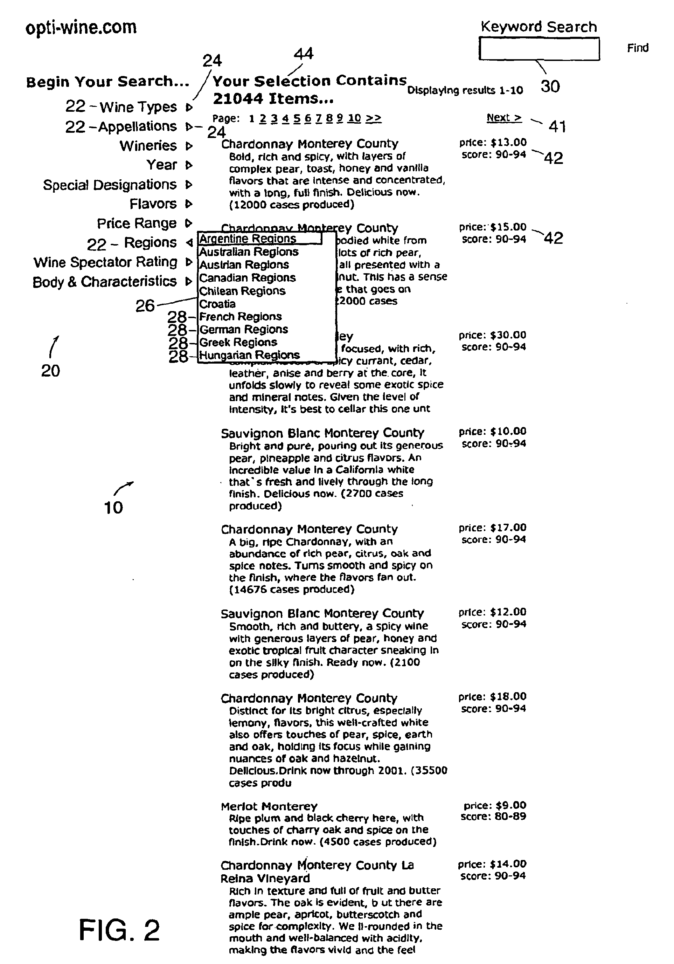

As shown in Figure 2, the user interface 10 allows users to narrow the navigation state by choosing a value 28 for an attribute 22, or by replacing the currently selected value with a more specific one (if appropriate). Preferably, the user interface 10 presents users with the options available to narrow the present navigation state, preferably with relevant terms organized by attribute. In some embodiments of the present invention, as shown in Figure 2, users can select values 28 from drop-down lists 26 denoted by indicators 24, that are organized by attributes 22 in the current navigation state. The user interface may present these navigation options in a variety of formats. For example, values can be presented as pictures or as symbols rather than as text. The interface may allow for any method of selecting terms, e.g., mouse clicks, keyboard strokes, or voice commands. The interface may be provided through various media and devices, such as television or WWW, and telephonic or wireless devices. Although discussed herein primarily as a visual interface, the interface may also include an audio component or be primarily audio-based.

Preferably, in the present navigation state, the user interface only presents options for narrowing the navigation state that lead to a navigation state with at least one document. This preferred criteria for providing navigation options ensures that there are no "dead ends," or navigation states that correspond to an empty result set.

Preferably, the user interface only presents options for narrowing the navigation state if they lead to a navigation state with strictly fewer documents than the present one. Doing so ensures that the user interface does not present the user with choices that are already implied by terms in the current navigation state.

Preferably, the user interface presents a new navigation state as soon as the user has chosen a term 28 to narrow the current navigation state, without any further triggering action by the user. Because the system responds to each user with immediate feedback, the user need not formulate a comprehensive query and then submit the query.

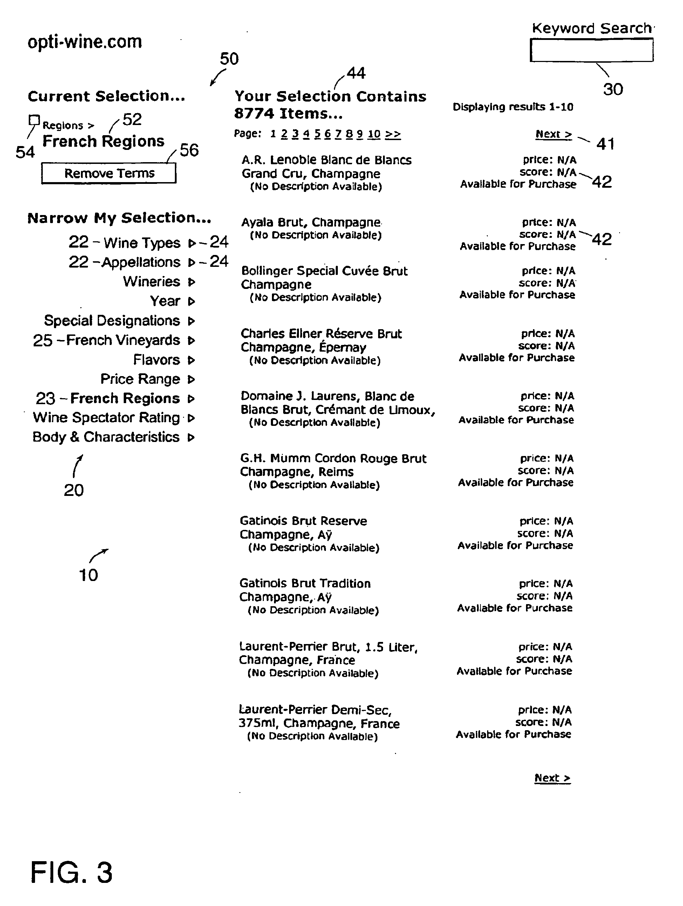

In accordance with one embodiment of the present invention, as shown in Figures 3 and 4, the user interface 10 may enable broadening of the current navigation state by allowing the user to remove terms 52 from the list 50 of terms selected. For example, the interface 10 may provide a list 50 with checkboxes 54 for removing selections and a button 56 to trigger the new search. In the illustrated embodiment, the user can remove selected terms 52 in any order and can remove more than one selection 52 at a time.

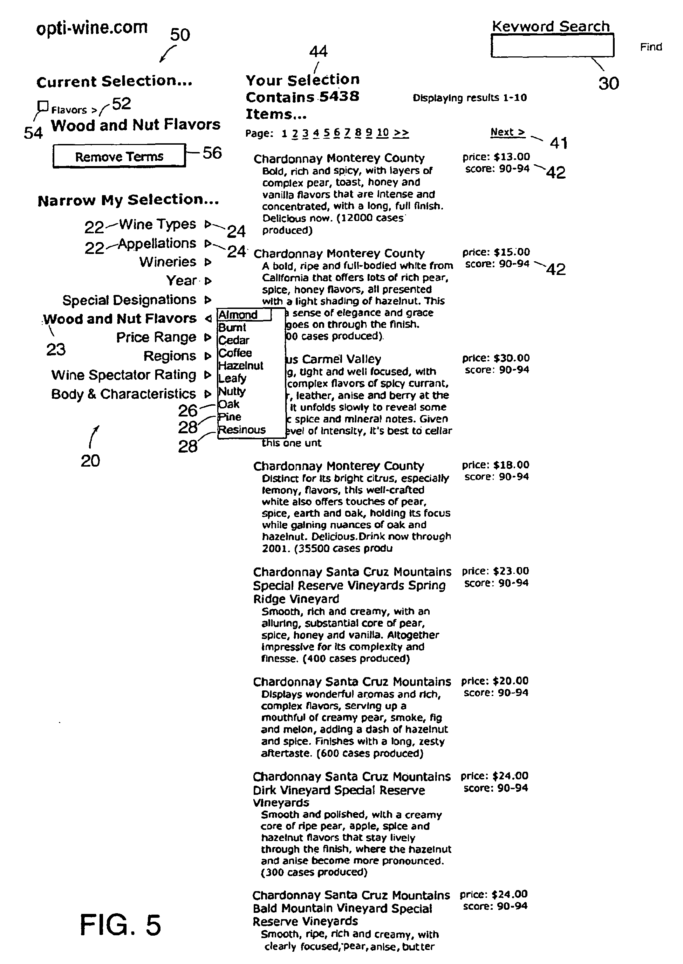

Preferably, the navigation options presented to the user are context-dependent. For example, terms that refine previously selected terms may become navigation options in the resulting navigation state. For example, referring to Figure 5, after the term *Flavors: Wood and Nut Flavors* 52 is selected (the user has selected the value Wood and Nut Flavors 23 for the attribute Flavors), Wood and Nut Flavors 23 then appears in the interface for the new navigation state in the list 20 of attributes and allows selection of values 28 that relate to that specific attribute for further refinement of the query. The user interface may also present certain attributes that were not presented initially, as they become newly relevant. For example, comparing Figure 3 to Figure 2, the attribute French Vineyards 25 appears in the list 20 of attributes only after the user has already selected the term *Regions: French Regions* in a previous navigation state. Attributes may be embedded in this way to as many levels as are desired. Presenting attributes as navigation options when those attributes become relevant avoids overwhelming the user with navigation options before those options are meaningful.

Additionally, for some attributes 22, multiple incomparable (non-refining) selections of values 28 may be applicable. For example, for the attribute Flavor, the values Fruity and Nutty, neither of which refines the other, may both be selected so that the terms *Flavors: Fruity* and *Flavors: Nutty* narrow the navigation state. Thus, users may sometimes be able to refine a query by selecting multiple values under a single attribute.

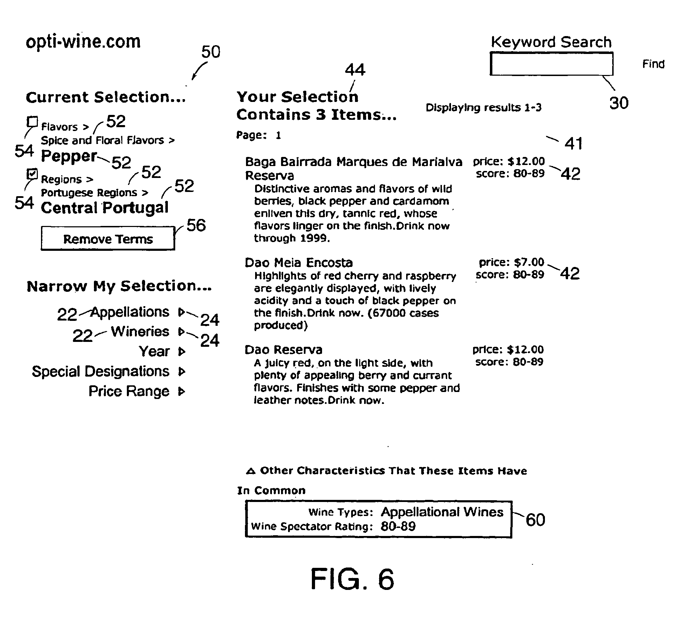

Preferably, certain attributes will be eliminated as navigation options if they are no longer valid or helpful choices. For example, if all of the documents in the result set share a common term (in addition to the term(s) selected to reach the navigation state), then selection of that term will not further refine the result set; thus, the attribute associated with that term is eliminated as a navigation option. For example, comparing Figure 6 with Figure 4, the attribute Wine Types 27 has been eliminated as a navigation option because all of the documents 42 in the result set share the same term, *Wine Types: Appellational Wines.* In preferred embodiments, an additional feature of the interface 10 is that this information is presented to the user as a common characteristic of the documents 42 in the result set. For example, referring to Figure 6, the interface 10 includes a display 60 that indicates the common characteristics of the documents 42 in the result set. Removing a term as a navigation option when all of the documents in the result set share that term prevents the user from wasting time by selecting terms that do not refine the result set.

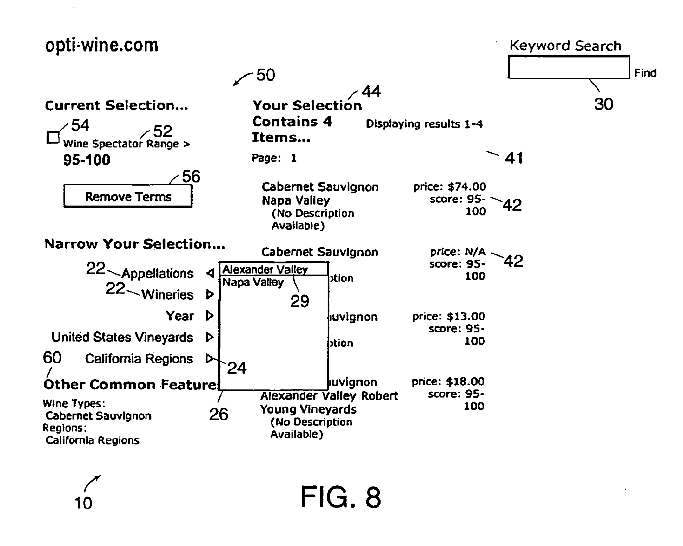

Preferably, the user interface also eliminates values as navigation options if their selection would result in no documents in the result set. For example, comparing Figure 8 to Figure 7, after the user selects the term *Wine Spectator Range: 95 - 100,* the user interface eliminates as navigation options all the values 28, 29 in the list 26 of values for the attribute Appellations 22 except for the values Alexander Valley 29 and Napa Valley 29. Alexander Valley 29 and Napa Valley 29 are the only two values in the list 26 of values for the attribute Appellations that return at least one document in the result set; all other values 28 return the empty set. Removing values as navigation options that would result in an empty result set saves the user time by preventing the user from reaching dead-ends.

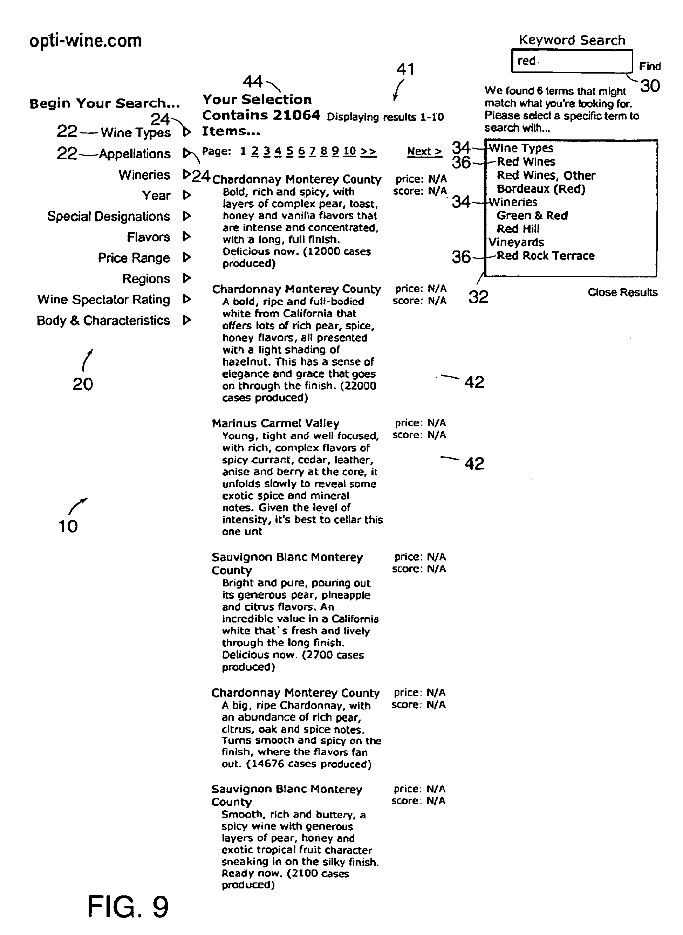

Preferably, the user interface allows users to search for desired words using free-text search. In accordance with one embodiment of the present invention, illustrated in Figure 9, a search box 30 preferably allows users to perform a free-text search for terms of interest, rather than performing a full-text search of the documents themselves. Preferably, the user interface responds to such a search by presenting a list 32 of terms 34 including organized by attribute 36, and allowing the user to select from among them. Preferably, the user interface responds to the user's selection by presenting the user with the navigation state corresponding to the selection of that term. The user may then either navigate from that state (i.e., by narrowing or broadening it) or perform additional free-text searches for terms.

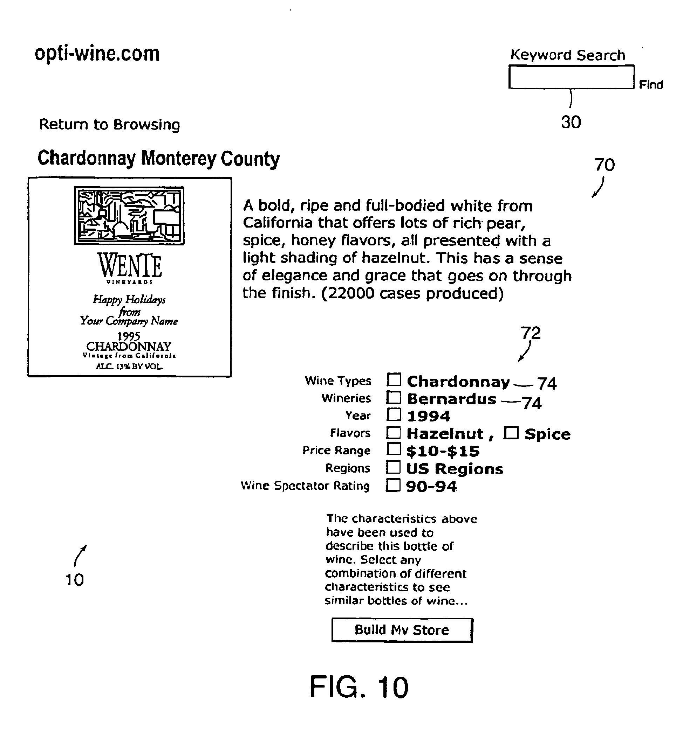

Preferably, the user interface 10 presents a full or partial list 41 of the documents that correspond to the current navigation state. Preferably, if a user is interested in a particular document 42, the user may select it and obtain a record 70 containing further information about it, including the list 72 of terms 74 that are associated with that document, as shown in Figure 10. Preferably, the user interface 10 allows the user to select any subset of those terms 74 and thereby navigate to the navigation state that corresponds to the selected term set.

Preferably, the user interface 10 also offers navigation options that directly link to an associated navigation state that is relevant to, but not necessarily a generalization or refinement of, the present navigation state. These links preferably infer the user's interests from the present navigation state and enable the user to cross-over to a related topic. For example, if the user is visiting a particular navigation state in a food domain, links may direct the user to navigation states of wines that would complement those foods in the wine domain.

Although the interface to the navigation system has been described herein as a user interface 10, the interface could provide other forms of access to the navigation system. In alternative embodiments, the interface may be an applications program interface to allow access to the navigation system for or through other applications. The interface may also enhance the functionality of an independent data-oriented application. The interface may also be used in the context of a WWW-based application or an XML-based application. The navigation system may also support multiple interface modes simultaneously. The navigation system may be made available in a variety of ways, for example via wireless communications or on handheld devices.

### Knowledge Base

Preferably, the navigation system stores all information relevant to navigation in a knowledge base. The knowledge base is the repository of information from two processes: taxonomy definition and classification. Taxonomy definition is the process of identifying the relevant attributes to characterize documents, determining the acceptable values for those attributes (such as a list or range of values), and defining a partial order of refinement relationships among terms (attribute-value pairs). Classification is the process of associating terms with documents. The knowledge base may also be used to maintain any information assets that support these two processes, such as domains, classification rules and default expectations. Additionally, the knowledge base may be used to maintain supplementary information and materials that affect users' navigation experience.

The taxonomy definition process identifies a set of attributes that appropriately characterize documents. A typical way to organize the taxonomy definition process is to arrange the collections of documents into domains, which are sets of documents that conform to a natural grouping and for which a manageable number of attributes suffice to effectively distinguish and navigate among the documents in that domain. The knowledge base preferably includes a characterization of each domain, which might include rules or default expectations concerning the classification of documents in that domain.

The taxonomy definition process also identifies a full set of values, at varying levels of specificity when appropriate, for each attribute. The values preferably identify the specific properties of the documents in the collection. The values may be enumerated explicitly or defined implicitly. For example, for a "color" attribute, a full set of valid color values may be specified, but for a "price" or "date" attribute, a range within which the values may fall or a general data type, without defining a range, may be specified. The process of identifying these values may include researching the domain or analyzing the collection of documents.

The taxonomy definition process also defines a partial order of refinement relationships among terms (attribute-value pairs). For example, the term *Origin: France* could refine the term *Origin: Europe.* The refinement relationship is transitive and antisymmetric but not necessarily total. Transitivity means that, if term A refines term B and term B refines term C, then term A refines term C. For example, if *Origin: Paris* refines *Origin: France* and *Origin: France* refines *Origin: Europe,* then *Origin: Paris* refines *Origin: Europe.* Antisymmetry means that, if two terms are distinct, then both terms cannot refine each other. For example, if *Origin: Paris* refines *Origin: France,* then *Origin: France* does not refine *Origin: Paris.*

Further, the partial order of refinement relationships among terms is not necessarily a total one. For example, there could be two terms, *Origin: France* and *Origin: Spain,* such that neither term refines the other. Two terms with this property are said to be incomparable. Generally, a set of two or more terms is mutually incomparable if, for every pair of distinct terms chosen from that set, the two terms are incomparable. Typically, but not necessarily, two terms with distinct attributes will be incomparable.

Given a set of terms, a term is a maximal term in that set if it does not refine any other terms in the set, and it is a minimal term in that set if no other term in the set refines it. For example, in the set {*Origin: France, Origin: Paris, Origin: Spain, Origin: Madrid*}*, Origin: France* and *Origin: Spain* are maximal, while *Origin: Paris* and *Origin: Madrid* are minimal. In the knowledge base, a term is a root term if it does not refine any other terms and a term is a leaf term if no other term refines it.

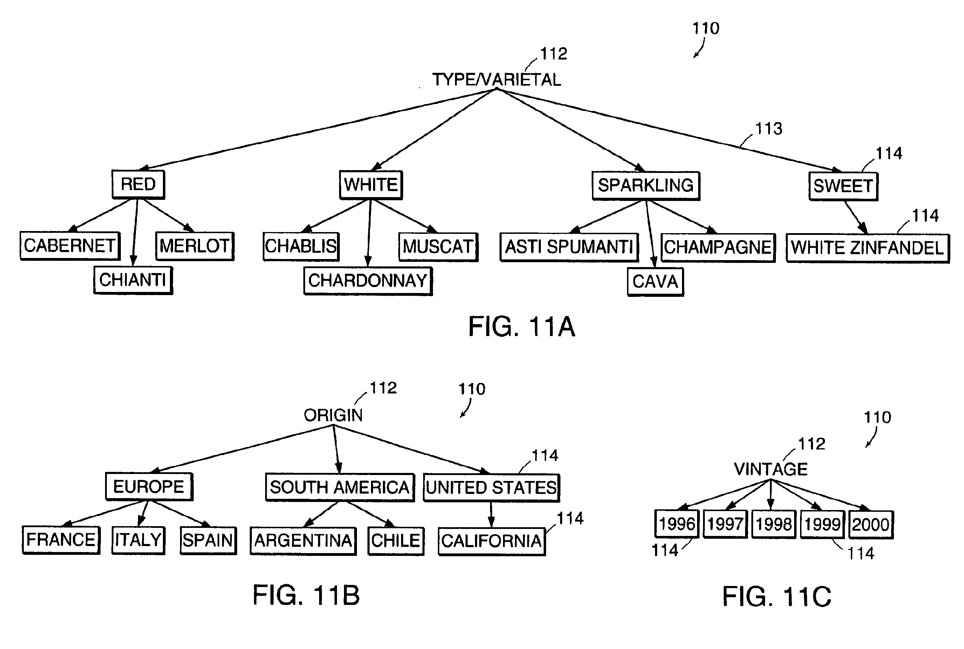

Figures 11A, 11B, and 11C illustrate attributes 112 and values 114, arranged in accordance with the partial order relationships, that could be used for classifying wines. The attributes 112 are Type/Varietal, Origin, and Vintage. Each attribute 112 corresponds to a maximal term for that attribute. An attribute 112 can have a flat set of mutually incomparable values (e.g., Vintage), a tree of values (e.g., Origin), or a general partial order that allows a value to refine a set of two or more mutually incomparable values (e.g., Type/Varietal). The arrows 113 indicate the refinement relationships among values 114.

Attributes and values may be identified and developed in several ways, including manual or automatic processing and the analysis of documents. Moreover, this kind of analysis may be top-down or bottom-up; that is, starting from root terms and working towards leaf terms, or starting from leaf terms and working towards root terms. Retailers, or others who have an interest in using the presented invention to disseminate information, may also define attributes and terms.

The classification process locates documents in the collection of navigation states by associating each document with a set of terms. Each document is associated with a set of mutually incomparable terms, e.g., {*TypelVarietal: Chianti, Origin: Italy, Vintage: 1996*}*,* as well as any other desired descriptive information. If a document is associated with a given term, then the document is also associated with all of the terms that the given term refines.

The classification process may proceed according to a variety of workflows. Documents may be classified in series or in parallel, and the automatic and manual classification steps may be performed one or more times and in any order. To improve accuracy and throughput, human experts may be assigned as specialists to oversee the classification task for particular subsets of the documents, or even particular attributes for particular subsets of the documents. In addition, the classification and taxonomy processes may be interleaved, especially as knowledge gained from one process allows improvements in the other.

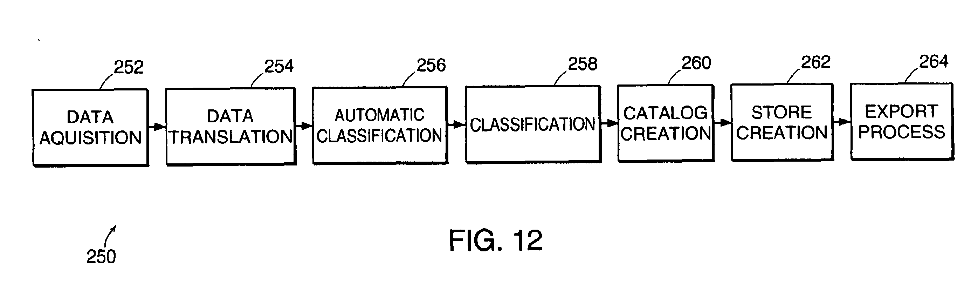

Figure 12 illustrates the stages in a possible flow for the classification process 250. The data acquisition step 252, that is, the collection of documents for the database, may occur in several different ways. For example, a retailer with a product catalog over which the navigation system will operate might provide a set of documents describing its products as a pre-defined set. Alternatively, documents may be collected from one source, e.g., one Web site, or from a number of sources, e.g., multiple Web sites, and then aggregated. If the desired documents are Web pages, the documents may be collected by appropriately crawling the Web, selecting documents, and discarding documents that do not fit in the domain. In the data translation step 254, the collected documents are formatted and parsed to facilitate further processing. In the automatic classification step 256, the formatted and parsed documents are processed in order to automatically associate documents with terms. In the manual classification step 258, human reviewers may verify and amend the automatic classifications, thereby ensuring quality control. Preferably, any rules or expectations violated in either the automatic classification step 256 or the manual classification step 258 would be flagged and presented to human reviewers as part of the manual classification step 258. If the collection of documents is divided into domains, then there will typically be rules that specify a certain minimal or preferred set of attributes used to classify documents from each domain, as well as other domain-specific classification rules. When the classification process is complete, each document will have a set of terms associated with it, which locate the document in the collection of navigation states.

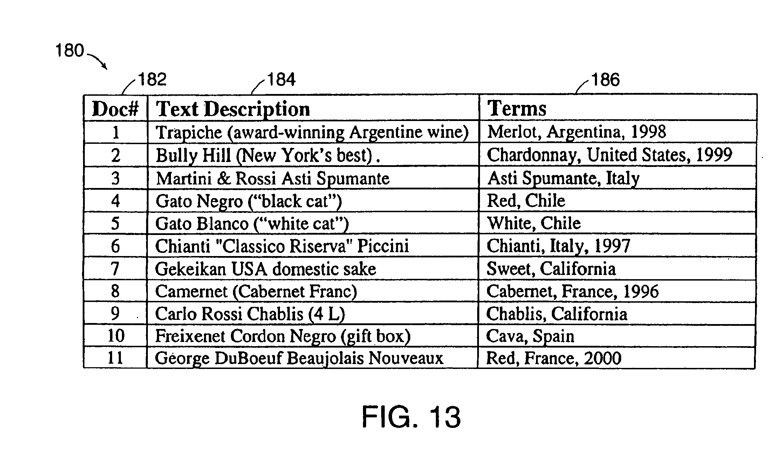

In Figure 13, table 180 shows a possible representation of a collection of classified wine bottles. Preferably, each entry is associated with a document number 182, which could be a universal identifier, a name 184, and the associated terms 186. The name is preferably descriptive information that could allow the collection to be accessed via a free-text search engine as well as via the term-based navigation system.

In another aspect of the invention, the knowledge base also includes a catalog of canonical representations of documents. Each catalog entry represents a conceptually distinct item that may be associated with one or more documents. The catalog allows aggregation of profile information from multiple documents that relate to the item, possibly from multiple sources. For example, if the same wine is sold by two vendors, and if one vendor provides vintage and geographic location information and another provides taste information, that information from the two vendors can be combined in the catalog entry for that type of wine. The catalog may also improve the efficiency of the classification process by eliminating duplicative profiling. In Figure 12, the catalog creation step 260 associates classified documents with catalog entries, creating new catalog entries when appropriate. For ease of reference, an item may be uniquely identified in the catalog by a universal identifier.

The knowledge base may also define stores, where a store is a subcollection of documents that are grouped to be searchable at one time. For example, a particular online wine merchant may not wish to display documents corresponding to products sold by that merchant's competitors, even though the knowledge base may contain such documents. In this case, the knowledge base can define a store of documents that does not include wines sold by the merchant's competitors. In Figure 12, the store creation step 262 may define stores based on attributes, terms, or any other properties of documents. A document may be identified with more than one store. The knowledge base may also contain attributes or terms that have been customized for particular stores.

In Figure 12, the export process step 264 exports information from the knowledge base to another stage in the system that performs further processing necessary to generate a navigable data structure.

### Navigation States

The navigation system represents, explicitly or implicitly, a collection of navigation states. These navigation states are related by a partial order of refinement that is derived from the partial order that relates the terms.

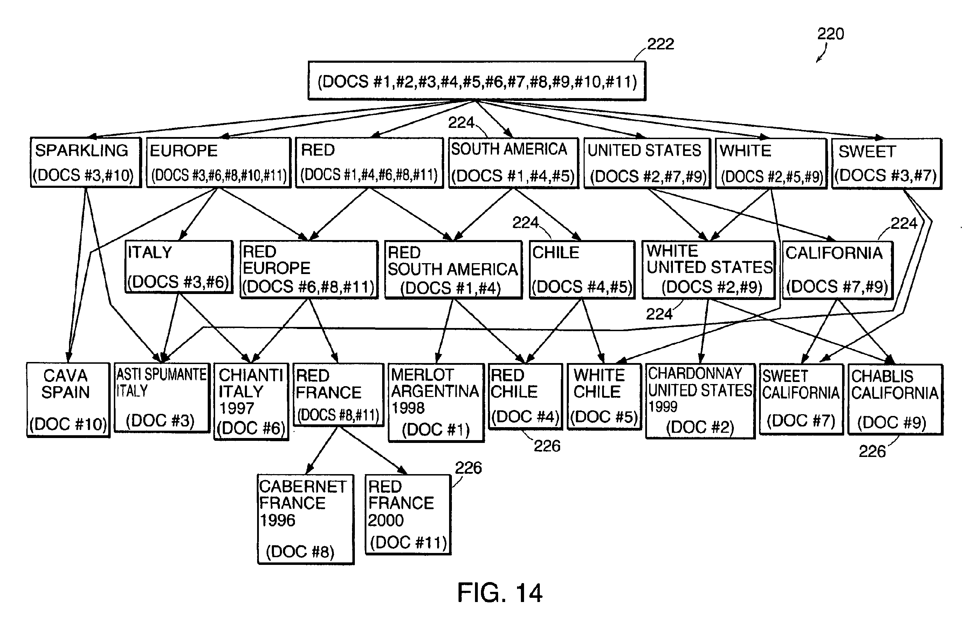

A navigation state has two representations. First, a navigation state corresponds to a subset of the collection of documents. Second, a navigation state corresponds to a set of mutually incomparable terms. Figure 14 illustrates some navigation states for the documents and terms based on the wine example discussed above. For example, one navigation state 224 is {*Origin: South America*} (documents #1, #4, #5); a second navigation state 224 is {*Type*/*Varietal: White, Origin: United States*} (documents #2, #9). The subset of documents corresponding to each navigation state includes the documents that are commonly associated with all of the terms in the corresponding set of mutually incomparable terms. At the same time, the set of mutually incomparable terms corresponding to each navigation state includes all of the minimal terms from the set of terms that are common to the subset of documents, i.e., the set of terms that are commonly associated with every document in the subset. Each navigation state is preferably unique and fully specified; for a particular set of terms, or for a given set of documents, there is no more than one corresponding navigation state.

One way preferred to define the collection of navigation states is to uniquely identify each navigation state by a canonical set of mutually incomparable terms. A two-step mapping process that maps an arbitrary term set to a canonical set of mutually incomparable terms creates states that satisfy this property. In the first step of the process, an arbitrary set of terms is mapped to the subset of documents that are associated with all of those terms. Recalling that if a document is associated with a given term, then the document is also associated with all of the terms that the given term refines, in the second step of the process, this subset of documents is mapped to the set of minimal terms in the set of terms that are common to all of the documents in that document set. The term set derived from this second step is a set of mutually incomparable terms that uniquely identifies the corresponding subset of documents, and, hence, is a canonical representation for a navigation state. By way of illustration, referring to the wine example in Figure 14, the term set {*Origin: France*} maps to the subset of documents {documents #8, #11}, which in turn maps to the canonical term set {*Type*/*Varietal: Red, Origin: France*}*.*

The navigation states 222, 224, 226 are related by a partial order of refinement relationships 220 derived from the partial order that relates terms. This partial order can be expressed in terms of either the subsets of documents or the term sets that define a navigation state. Expressed in terms of subsets of documents, a navigation state A refines a navigation state B if the set of documents that corresponds to state A is a subset of the set of documents that corresponds to state B. Expressed in terms of term sets, a navigation state A refines a navigation state B if all of the terms in state B either are in state A or are refined by terms in state A. Referring to Figure 14, the navigation state 226 corresponding to the term set {*Type*/*Varietal: Red, Origin: Chile*} (document #4) refines the navigation state 224 corresponding to {*Origin: Chile*} (documents #4, #5). Since the refinement relationships among navigation states give rise to a partial order, they are transitive and antisymmetric. In the example, {*Type*/*Varietal: Red, Origin: Chile*} (document #4) refines {*Origin: Chile*} (documents #4, #5) and {*Origin: Chile*} (documents #4, #5) refines {*Origin: South America*} (documents #1, #4, #5); therefore, {*Type*/*Varietal: Red, Origin: Chile*} (document #4) refines {*Origin: South America*} (documents #1, #4, #5). The root navigation state 222 is defined to be the navigation state corresponding to the entire collection of documents. The leaf navigation states 226 are defined to be those that cannot be further refined, and often (though not necessarily) correspond to individual documents. There can be arbitrarily many intermediate navigation states 224 between the root 222 and the leaves 226. Given a pair of navigation states A and B where B refines A, there can be multiple paths of intermediate navigation states 224 connecting A to B in the partial order. For convenience of definition in reference to the implementation described herein, a navigation state is considered to refine itself.

A user browses the collection of documents by visiting a sequence of one or more navigation states typically starting at the root navigation state 222. There are three basic modes of navigation among these states. The first mode is refinement, or moving from the current navigation state to a navigation state that refines it. The user can perform refinement either by adding a term to the current navigation state or by refining a term in the current navigation state; i.e., replacing a term with a refinement of that term. After the user adds or refines a term, the new term set can be mapped to a canonical term set according to the two-step mapping described above. The second mode is generalization, or moving from the current navigation state to a more general navigation state that the current state refines. The user can perform generalization either by removing a term from the current navigation state or by generalizing a term in the current navigation state; i.e., replacing a current term with a term that the current term refines. After the user removes or generalizes a term, the new term set can be mapped to a canonical term set. The third mode is simply creating a query in the form of a desired term set, which again can be mapped to a canonical term set to obtain a navigation state.

### Implementation

The knowledge base is transferred to a navigable data structure in order to implement the present invention. The navigation states may be fully precomputed, computed dynamically at run-time, or partially precomputed. A cache may be used to avoid redundant computation of navigation states.

In preferred embodiments, the collection of navigation states may be represented as a graph-preferably, a directed acyclic multigraph with labeled edges. A graph is a combinatorial structure consisting of nodes and edges, where each edge links a pair of nodes. The two nodes linked by an edge are called its endpoints. With respect to the present invention, the nodes correspond to navigation states, and the edges represent transitions that refine from one navigation state to another. Since refinement is directional, each edge is directed from the more general node to the node that refines it. Because there is a partial order on the navigation states, there can be no directed cycles in the graph, i.e., the graph is acyclic. Preferably, the graph is a multigraph, since it allows the possibility of multiple edges connecting a given pair of nodes. Each edge is labeled with a term. Each edge has the property that starting with the term set of the more general end point, adding the edge term, and using the two-step map to put this term set into canonical form leads to a refinement which results in the navigation state that is the other endpoint. That is, each edge represents a refinement transition between nodes based on the addition of a single term.

The following definitions are useful for understanding the structure of the graph: descendant, ancestor, least common ancestor (LCA), proper ancestor, proper descendant, and greatest lower bound (GLB). These definitions apply to the refinement partial order among terms and among nodes. If A and B are terms and B refines A, then B is said to be a descendant of A and A is said to be an ancestor of B. If, furthermore, A and B are distinct terms, then B is said to be a proper descendant of A and A is said to be a proper ancestor of B. The same definitions apply if A and B are both nodes.

If C is an ancestor of A and C is also an ancestor of B, then C is said to be a common ancestor of A and B, where A, B, and C are either all terms or all nodes. The minimal elements of the set of common ancestors of A and B are called the least common ancestors (LCAs) of A and B. If no term has a pair of incomparable ancestors, then the LCA of two terms-or of two nodes-is unique. For example, the LCA of *Origin: Argentina* and *Origin: Chile* is *Origin: South America* in the partial order of terms 110 of Figure 11B. In general, however, there may be a set of LCAs for a given pair of terms or nodes.

Computation of the nodes in the graphs is preferably performed bottom-up.

The leaf nodes in the graph-that is, the nodes corresponding to leaf navigation states-may be computed directly from the classified documents. Typically, but not necessarily, a leaf node will correspond to a set containing a single document. The remaining, non-leaf nodes are obtained by computing the LCA-closure of the leaf nodes-that is, all of the nodes that are the LCAs of subsets of the leaf nodes.

The edges of the graph are determined according to a refinement function, called the R function for notational convenience. The R function takes as arguments two nodes A and B, where A is a proper ancestor of B, and returns the set of maximal terms such that, if term C is in R (A, B), then refining node A with term C results in a node that is a proper descendant of A and an ancestor (not necessarily proper) of B. For example, in Figure 14, R ({*Type*/*Varietal: Red*}*,* {*Type*/*Varietal: Merlot, Origin: Argentina, Vintage: 1998*}) = {*Type*/*Varietal: Merlot, Origin: South America, Vintage: 1998*}*.* If B₁ is an ancestor of B₂, then R (A, B₁) is a subset of R (A, B₂)-assuming that A is a proper ancestor of both B₁ and B₂. For example, R ({*TypelVarietal: Red* }, *Type*/*Varietal: Red, Origin: South America*}) = {*Origin: South America*}.

In the graph, the edges between nodes A and B will correspond to a subset of the terms in R (A, B). Also, no two edges from a single ancestor node A use the same term for refinement. If node A has a collection of descendant nodes {B₁, B₂,...} such that term C is in all of the R (A, Bᵢ), then the only edge from node A with term C goes to LCA (B₁, B₂,...), which is guaranteed to be the unique maximal node among the Bᵢ. In Figure 14, for example, the edge from node {*TypelVarietal: Red*} with term *Origin: South America* goes to node {*Type*/*Varietal: Red, Origin: South America*} rather than to that node's proper descendants {*TypelVarietal: Merlot, Origin: South America, Vintage: 1998*} and {*TypelVarietal: Red, Origin: Chile*}*.* The LCA-closure property of the graph ensures the existence of a unique maximal node among the Bᵢ. Thus, each edge maps a node-term pair uniquely to a proper descendant of that node.

The LCA-closure of the graph results in the useful property that, for a given term set S, the set of nodes whose term sets refine S has a unique maximal node. This node is called the greatest lower bound (GLB) of S.

The graph may be computed explicitly and stored in a combinatorial data structure; it may be represented implicitly in a structure that does not necessarily contain explicit representations of the nodes and edges; or it may be represented using a method that combines these strategies. Because the navigation system will typically operate on a large collection of documents, it is preferred that the graph be represented by a method that is scalable.

The graph could be obtained by computing the LCAs of every possible subset of leaf nodes. Such an approach, however, grows exponentially in the number of leaf nodes, and is inherently not scalable. An alternative strategy for obtaining the LCA closure is to repeatedly consider all pairs of nodes in the graph, check if each pair's LCA is in the graph, and add that LCA to the graph as needed. This strategy, though a significant improvement on the previous one, is still relatively not scalable.

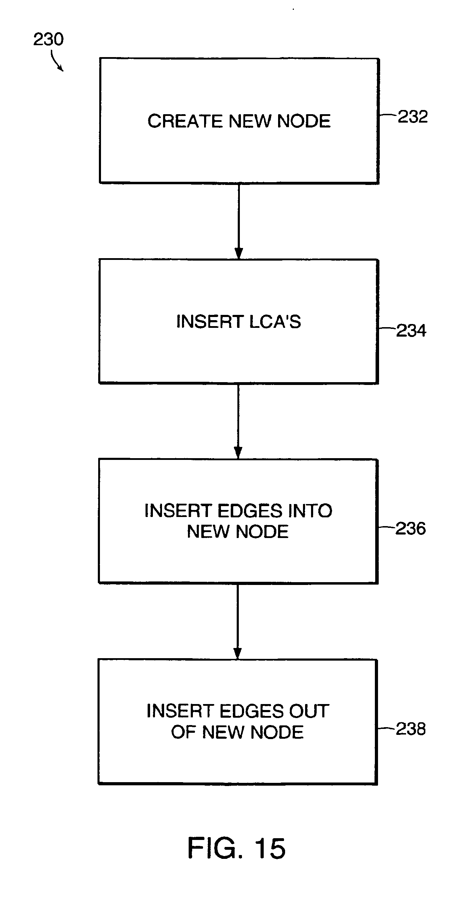

A more efficient way to precompute the nodes is to process the document set sequentially, compute the node for each document, and add that node to the graph along with any other nodes necessary to maintain LCA-closure. The system stores the nodes and edges as a directed acyclic multigraph. The graph is initialized to contain a single node corresponding to the empty term set, the root node. Referring to Figure 15, in process 230 for inserting a new node into the graph, in step 232, for each new document to be inserted into the graph that does not correspond to an existing node, the system creates a new node. In step 234, before inserting the new node into the graph, the system recursively generates and inserts any missing LCA nodes between the root node (or ancestor node) and the new node. To ensure LCA-closure after every node insertion, the system inserts the document node last, in steps 236 and 238, after inserting all the other nodes that are proper ancestors of it.

Inserting a new node requires the addition of the appropriate edges from ancestors to the node, in step 236, and to descendants out of the new node, in step 238. The edges into the node are preferably determined by identifying the ancestors that have refinement terms that lead into the new node and do not already have those refinement terms used on edges leading to intermediate ancestors of the new node. The edges out of the node are preferably determined by computing the GLB of the new node and appropriately adding edges from the new node to the GLB and to nodes to which the GLB has edges.

The entire graph may be precomputed by following the above procedures for each document in the collection. Precomputing of the graph may be preferred where the size of the graph is manageable, or if users are likely to visit every navigation state with equal probability. In practice, however, users typically visit some navigation states more frequently than others. Indeed, as the graph gets larger, some navigation states may never be visited at all. Unfortunately, reliable predictions of the frequency with which navigation states will be visited are difficult.

An alternative strategy to precomputing the navigation states is to create indexes that allow the navigation states to be computed dynamically. Specifically, each document can be indexed by all of the terms that are associated with that document or that have refinements associated with that document. The resulting index is generally much smaller in size than a data structure that stores the graph of navigation states. This dynamic approach may save space and precomputation time, but it may do so at the cost of higher response times or greater computational requirements for operation. A dynamic implementation may use a one-argument version of the R function that returns all refinement terms from a given navigation state, as well a procedure for computing the GLB of a term set.

It is also possible to precompute a subset of the navigation states. It is preferable to precompute the states that will cost the most to compute dynamically. For example, if a state corresponds to a large subset of the documents, it may be preferable to compute it in advance. In one possible partial precomputation approach, all navigation states corresponding to a subset of documents above a threshold size may be precomputed. Precomputing a state is also preferable if the state will be visited frequently. In some instances it may be possible to predict the frequency with which a navigation state will be visited. Even if the frequency with which a navigation state will be visited cannot be predicted in advance, the need to continually recompute can be reduced by caching the results of dynamic computation. Most recently or most frequently visited states may be cached.

As described above with respect to the interface, the system supports three kinds of query operations-namely refinement, generalization, and query by specifying a set of terms. These operations may be further described in terms of the graph. For query refinement, the system enumerates the terms that are on edges from the node corresponding to the current navigation state. When the user selects a term for refinement, the system responds by presenting the node to which that edge leads. Similarly, for query generalization options, the system enumerates and selects edges that lead to (rather than from) the node corresponding to the current navigation state. Alternatively, query generalization may be implemented as a special case of query by specifying a set of terms. For query by specifying a set of keywords, the system creates a virtual node corresponding to the given term set and determines the GLB of the virtual node in the graph. If no GLB is found, then there are no documents that satisfy the query. Otherwise, the GLB node will be the most general node in the graph that corresponds to a navigation state where all documents satisfy the query.

The navigation system of the present invention allows information providers to overlay a navigation system over any collection of documents. The knowledge base and navigation aspects of the invention can be performed independently by different providers, and information providers may outsource these functions to separate entities. Similarly, a generated knowledge base may be imported by a navigation specialist. Information providers may also outsource this navigation requirement to a navigation system provider. A navigation system provider could charge customers a license fee for the system independent of the amount of its usage. Alternatively, a navigation system provider could charge customers on a per-click basis, a per-purchase basis if products are available via the system, or per-transaction generated from a click through the navigation system. A navigation system provider could also function as an aggregator -- compiling records from a number of sources, combining them into a global data set, and generating a navigation system to search the data set.

A navigation system in accordance with the present invention may also enhance user profiling capability and merchandising capability. The navigation system may maintain a profile of users based on the users'selections, including the particular paths selected to explore the collection of navigation states. Using the knowledge base, the system may also infer additional information regarding the users' preferences and interests by supplementing the selection information with information regarding related documents, attributes and terms in the knowledge base. That information may be used to market goods and services related to the documents of interest to the user.

The foregoing description has been directed to specific embodiments of the invention. The invention may be embodied in other specific forms without departing from the scope of the invention. The embodiments, figures, terms and examples used herein are intended by way of reference and illustration only and not by way of limitation. The scope of the invention is indicated by the appended claims.

## Claims

1. A navigation system for a set of materials (42), the system comprising:
a plurality of attributes (22) characterizing the materials;
a plurality of values (28) describing the materials, wherein each of the values has an association with at least one of the attributes and each association defines an attribute-value pair, and wherein some of the attribute-value pairs refine other of the attribute-value pairs;
a plurality of navigation states, wherein each navigation state corresponds to a particular set of attribute-value pairs and to a particular subset of the materials, wherein for each navigation state the particular subset of the materials corresponding to the navigation state consists of those materials in the navigation system that are each described by every attribute-value pair in the particular set of attribute-value pairs corresponding to that navigation state and wherein for at least one navigation state the particular set of attribute-value pairs corresponding to that navigation state includes a plurality of mutually non-refining attribute-value pairs; and
an interface, the interface arranged to provide a plurality of transitions, each transition providing a direct path between two of the navigation states, wherein each transition represents a change from the set of attribute-value pairs corresponding to an originating navigation state to the set of attribute-value pairs corresponding to a destination navigation state, wherein a series of one or more transitions provides a path between any two navigation states;
**characterised in that**:
the interface is arranged to present a first set of navigation options for selection for an originating navigation state, each navigation option of the first set of navigation options indicating a respective attribute and providing a transition from the originating navigation state to a corresponding destination navigation state; and
the interface is arranged to present a second set of navigation options for selection for a first destination navigation state after transitioning from the originating navigation state to the first destination navigation state, each navigation option of the second set of navigation options indicating a respective attribute and providing a transition from the first destination navigation state to a corresponding further destination navigation state;
wherein at least one navigation option of the second set of navigation options indicates an attribute that is not indicated by the navigation options of the first set of navigation options and is determined by the system to be relevant for presentation for the first destination navigation state but not relevant for presentation for the originating navigation state, wherein the system is arranged to determine whether or not a navigation option is relevant for presentation for a navigation state in accordance with rules stored by the system in a knowledge base.

2. The navigation system of claim 1, wherein at least one of the transitions from a first navigation state to a second navigation state represents a refinement of the value of one of the corresponding set of attribute-value pairs for the first navigation state.

3. The navigation system of claim 1, wherein at least one of the transitions from a first navigation state to a second navigation state represents a generalization of the value of one of the corresponding set of attribute-value pairs for the first navigation state.

4. The navigation system of claim 1, wherein at least one of the transitions from a first navigation state to a second navigation state represents a deselection of the attribute of one of the corresponding set of attribute-value pairs for the first navigation state.

5. The navigation system of claim 1, wherein a first of the transitions from a first navigation state to a second navigation state represents a selection of an attribute-value pair corresponding to a first attribute and a second of the transitions from the first navigation state to a third navigation state represents a selection of an attribute-value pair corresponding to a second attribute.

6. The navigation system of claim 1, wherein at least one of the transitions from a first navigation state to a second navigation state represents a specification of an attribute-value pair corresponding to an attribute for which there is no corresponding attribute-value pair in the set of attribute-value pairs corresponding to the first navigation state.

7. The navigation system of claim 1, wherein a first navigation state corresponds to only one of the materials in the set of materials, at least one of the transitions from the first navigation state to a second navigation state representing a selection of a particular attribute-value pair associated with the first navigation state.

8. The navigation system of claim 1, wherein the values associated with at least one of the plurality of attributes are defined explicitly.

9. The navigation system of claim 1, wherein the values associated with at least one of the plurality of attributes are defined implicitly.

10. The navigation system of claim 1, wherein, for attribute-value pairs sharing a common attribute, no attribute-value pair refines a plurality of mutually non-refining attribute-value pairs.

11. The navigation system of claim 1, wherein, for attribute-value pairs sharing a common attribute, at least one attribute-value pair refines a plurality of mutually non-refining attribute-value pairs.

12. The navigation system of claim 1, the interface including a human user interface.

13. The navigation system of claim 1, the interface including an application program interface.

14. The navigation system of claim 1, wherein the interface supplements the functionality of an independent data-oriented program.

15. The navigation system of claim 1, the interface including a free-text search tool for searching the attributes.

16. The navigation system of claim 1, the interface including a free-text search tool for searching the values.

17. The navigation system of claim 1, the interface including a presentation of attribute-value pairs corresponding to a current navigation state.

18. The navigation system of claim 17, the presentation of attribute-value pairs corresponding to the current navigation state including user-selected attribute-value pairs and inferred attribute-value pairs, the interface including an indication of user-selected attribute-value pairs and of inferred attribute-value pairs.

19. A method for enabling a user to browse a set of materials (42), the method comprising using a navigation system to perform steps of:
providing a set of materials, a plurality of attributes (22) characterizing the materials, a plurality of values (28) describing the materials, each of the values having an association with at least one of the attributes, each association defining an attribute-value pair, some of the attribute-value pairs refining other of the attribute-value pairs;
providing a plurality of navigation states, wherein each navigation state corresponds to a particular set of attribute-value pairs and to a particular subset of the materials, wherein for each navigation state the particular subset of the materials corresponding to the navigation state consists of those materials in the navigation system that are each described by every attribute-value pair in the particular set of attribute-value pairs corresponding to that navigation state and wherein for at least one navigation state the particular set of attribute-value pairs corresponding to that navigation state includes a plurality of mutually non-refining attribute-value pairs; and
providing an interface, the interface providing a plurality of transitions, each transition providing a direct path between two of the navigation states, wherein each transition represents a change from the set of attribute-value pairs corresponding to an originating navigation state to the set of attribute-value pairs corresponding to a destination navigation state, wherein a series of one or more transitions provides a path between any two navigation states;
**characterised in that** the method comprises:
the interface presenting a first set of navigation options for selection for an originating navigation state, each navigation option of the first set of navigation options indicating a respective attribute and providing a transition from the originating navigation state to a corresponding destination navigation state; and
the interface presenting a second set of navigation options for selection for a first destination navigation state after transitioning from the originating navigation state to the first destination navigation state, each navigation option of the second set of navigation options indicating a respective attribute and providing a transition from the first destination navigation state to a corresponding further destination navigation state;
wherein at least one navigation option of the second set of navigation options indicates an attribute that is not indicated by the navigation options of the first set of navigation options and is determined by the system to be relevant for presentation for the first destination navigation state but not relevant for presentation for the originating navigation state, wherein the method comprises the system determining whether or not a navigation option is relevant for presentation for a navigation state by using rules stored by the system in a knowledge base.

20. The method of claim 19, wherein the presented navigation options are organized by attribute.

## Patentansprüche

1. Navigationssystem für eine Menge von Materialien (42), wobei das System umfasst:
eine Mehrzahl von Attributen (22), die die Materialien charakterisieren;
eine Mehrzahl von Werten (28), die die Materialien beschreiben, wobei jeder der Werte eine Assoziation mit wenigstens einem der Attribute hat und jede Assoziation ein Attribut-Wert-Paar definiert, und wobei einige der Attribut-Wert-Paare andere der Attribut-Wert-Paare präzisieren;
eine Mehrzahl von Navigationszuständen, wobei jeder Navigationszustand einer bestimmten Menge von Attribut-Wert-Paaren und einer bestimmten Teilmenge von Materialien entspricht, wobei für jeden Navigationszustand die bestimmte Teilmenge der Materialien, die zu dem Navigationszustand gehören, aus denjenigen Materialien in dem Navigationssystem besteht, die jeweils durch jedes Attribut-Wert-Paar in der bestimmten Menge von Attribut-Wert-Paaren, die dem Navigationszustand entsprechen, beschrieben sind und wobei für wenigstens einen Navigationszustand die bestimmte Menge von Attribut-Wert-Paaren, die dem Navigationszustand entspricht, eine Mehrzahl von sich gegenseitig nicht-präzisierenden Attribut-Wert-Paaren einschließt; und
ein Interface, wobei das Interface dazu eingerichtet ist, um eine Mehrzahl von Übergängen bereitzustellen, wobei jeder Übergang einen direkten Pfad zwischen zwei der Navigationszustände vorsieht, wobei jeder Übergang einen Wechsel von der Menge von Attribut-Wert-Paaren, die einem Ursprungsnavigationszustand entspricht, zu einem Zielnavigationszustand darstellt, wobei eine Reihe von einem oder mehreren Übergängen einen Pfad zwischen zwei Navigationszuständen vorsieht;
**dadurch gekennzeichnet, dass**:
das Interface dazu eingerichtet ist, um eine erste Menge von Navigationsoptionen zur Auswahl eines Ursprungsnavigationszustands darzustellen, wobei jede Navigationsoption der ersten Menge von Navigationsoptionen ein jeweiliges Attribut andeutet und einen Übergang von dem Ursprungsnavigationszustand zu einem entsprechenden Zielnavigationszustand bereitstellt; und
das Interface dazu eingerichtet ist, um eine zweite Menge von Navigationsoptionen zur Auswahl eines ersten Zielnavigationszustands nach einem Übergang von dem Ursprungsnavigationszustand zu dem ersten Zielnavigationszustand darzustellen, wobei jede Navigationsoption der zweiten Menge von Navigationsoptionen ein jeweiliges Attribut andeutet und einen Übergang von dem ersten Zielnavigationszustand zu einem entsprechenden weiteren Zielnavigationszustand bereitstellt;
wobei wenigstens eine Navigationsoption der zweiten Menge von Navigationsoptionen ein Attribut andeutet, das von den Navigationsoptionen der ersten Menge von Navigationsoptionen nicht angedeutet ist und von dem System bestimmt ist, zur Darstellung des ersten Zielnavigationszustands relevant zu sein aber nicht relevant zu sein für die Darstellung des Ursprungsnavigationszustands, wobei das System dazu eingerichtet ist zu bestimmen, ob eine Navigationsoption relevant oder nicht relevant ist für die Darstellung eines Navigationszustands in Übereinstimmung mit Regeln, die von dem System in einer Informationsbank gespeichert sind.

2. Navigationssystem nach Anspruch 1, wobei wenigstens einer der Übergänge von einem ersten Navigationszustand zu einem zweiten Navigationszustand eine Präzisierung des Wertes einer den Attribut-Wert-Paaren entsprechenden Menge für den ersten Navigationszustand darstellt.

3. Navigationssystem nach Anspruch 1, wobei wenigstens einer der Übergänge von einem ersten Navigationszustand zu einem zweiten Navigationszustand eine Verallgemeinerung des Wertes einer den Attribut-Wert-Paaren entsprechenden Menge für den ersten Navigationszustand darstellt.

4. Navigationssystem nach Anspruch 1, wobei wenigstens einer der Übergänge von einem ersten Navigationszustand zu einem zweiten Navigationszustand eine Abwahl des Attributs einer den Attribut-Wert-Paaren entsprechenden Menge für den ersten Navigationszustand darstellt.

5. Navigationssystem nach Anspruch 1, wobei ein erster der Übergänge von einem ersten Navigationszustand zu einem zweiten Navigationszustand eine Auswahl eines Attribut-Wert-Paares, das einem ersten Attribut entspricht, darstellt, und ein zweiter der Übergänge von dem ersten Navigationszustand zu einem dritten Navigationszustand eine Auswahl eines Attribut-Wert-Paares, das einem zweiten Attribut entspricht, darstellt.

6. Navigationssystem nach Anspruch 1, wobei wenigstens einer der Übergänge von einem ersten Navigationszustand zu einem zweiten Navigationszustand eine Spezifizierung eines Attribut-Wert-Paares darstellt, das einem Attribut entspricht, für welches es kein entsprechendes Attribut-Wert-Paar in der Menge von Attribut-Wert-Paaren entsprechend dem ersten Navigationszustand gibt.

7. Navigationssystem nach Anspruch 1, wobei ein erster Navigationszustand nur einem der Materialien in der Menge von Materialien entspricht, wobei wenigstens einer der Übergänge von dem ersten Navigationszustand zu einem zweiten Navigationszustand eine Auswahl eines bestimmten Attribut-Wert-Paares darstellt, das mit dem ersten Navigationszustand assoziiert ist.

8. Navigationssystem nach Anspruch 1, wobei die Werte, die mit wenigstens einem der Mehrzahl von Attributen assoziiert sind, explizit definiert sind.

9. Navigationssystem nach Anspruch 1, wobei die Werte, die mit wenigstens einem der Mehrzahl von Attributen assoziiert sind, implizit definiert sind.

10. Navigationssystem nach Anspruch 1, wobei für Attribut-Wert-Paare, die ein gemeinsames Attribut teilen, kein Attribut-Wert-Paar eine Mehrzahl von sich gegenseitig nicht-präzisierenden Attribut-Wert-Paaren präzisiert.

11. Navigationssystem nach Anspruch 1, wobei für Attribut-Wert-Paare, die ein gemeinsames Attribut teilen, wenigstens ein Attribut-Wert-Paar eine Mehrzahl von sich gegenseitig nicht-präzisierenden Attribut-Wert-Paaren präzisiert.

12. Navigationssystem nach Anspruch 1, wobei das Interface ein menschliches Benutzerinterface umfasst.

13. Navigationssystem nach Anspruch 1, wobei das Interface ein Anwendungsprogramminterface umfasst.

14. Navigationssystem nach Anspruch 1, wobei das Interface die Funktionalität eines unabhängigen datenorientierten Programms ergänzt.

15. Navigationssystem nach Anspruch 1, wobei das Interface ein Freitext-Suchwerkzeug zur Suche nach den Attributen umfasst.

16. Navigationssystem nach Anspruch 1, wobei das Interface ein Freitext-Suchwerkzeug zur Suche nach den Werten umfasst.

17. Navigationssystem nach Anspruch 1, wobei das Interface eine Darstellung von Attribut-Wert-Paaren, die einem aktuellen Navigationszustand entsprechen, umfasst.

18. Navigationssystem nach Anspruch 17, wobei die Darstellung von Attribut-Wert-Paaren, die dem aktuellen Navigationszustand entsprechen, benutzerselektierte Attribut-Wert-Paare und gefolgerte Attribut-Wert-Paare umfasst, wobei das Interface eine Indikation von benutzer-selektierten Attribut-Wert-Paaren und von gefolgerten Attribut-Wert-Paaren umfasst.

19. Verfahren, um einem Benutzer zu ermöglichen, eine Menge von Materialien (42) zu durchsuchen, wobei das Verfahren die Benutzung eines Navigationssystems umfasst, um die Schritte auszuführen:
Bereitstellen einer Menge von Materialien, einer Mehrzahl von Attributen (22), die die Materialien charakterisieren, einer Mehrzahl von Werten (28), die die Materialien beschreiben, wobei jeder der Werte eine Assoziation mit wenigstens einem der Attribute hat, wobei jede Assoziation ein Attribut-Wert-Paar definiert, wobei einige der Attribut-Wert-Paare andere der Attribut-Wert-Paare präzisieren;
Bereitstellen einer Mehrzahl von Navigationszuständen, wobei jeder Navigationszustand einer bestimmten Menge von Attribut-Wert-Paaren und einer bestimmten Teilmenge von Materialien entspricht, wobei für jeden Navigationszustand die bestimmte Teilmenge der Materialien, die dem Navigationszustand entsprechen, aus denjenigen Materialien in dem Navigationssystem besteht, die jeweils durch jedes Attribut-Wert-Paar in der bestimmten Menge von Attribut-Wert-Paaren, die dem Navigationszustand entsprechen, beschrieben werden und wobei für wenigstens einen Navigationszustand die bestimmte Menge von Attribut-Wert-Paaren, die dem Navigationszustand entsprechen, eine Mehrzahl von sich gegenseitig nicht-präzisierenden Attribut-Wert-Paaren einschließt; und
Bereitstellen eines Interface, wobei das Interface eine Mehrzahl von Übergängen bereitstellt, wobei jeder Übergang einen direkten Pfad zwischen zwei der Navigationszustände bereitstellt, wobei jeder Übergang einen Wechsel von der Menge von Attribut-Wert-Paaren, die einem Ursprungsnavigationszustand entsprechen, zu der Menge von Attribut-Wert-Paaren, die einem Zielnavigationszustand entsprechen, darstellt, wobei eine Reihe von einem oder mehreren Übergängen einen Pfad zwischen zwei Navigationszuständen bereitstellt;
**dadurch gekennzeichnet, dass** das Verfahren umfasst:
dass das Interface eine erste Menge von Navigationsoptionen zur Auswahl eines Ursprungsnavigationszustands darstellt, wobei jede Navigationsoption der ersten Menge von Navigationsoptionen ein jeweiliges Attribut andeutet und einen Übergang von dem Ursprungsnavigationszustand zu einem entsprechenden Zielnavigationszustand bereitstellt; und
dass das Interface eine zweite Menge von Navigationsoptionen zur Auswahl eines ersten Zielnavigationszustands nach einem Übergang von dem Ursprungsnavigationszustand zu dem ersten Zielnavigationszustand darstellt, wobei jede Navigationsoption der zweiten Menge von Navigationsoptionen ein jeweiliges Attribut andeutet und einen Übergang von dem ersten Zielnavigationszustand zu einem entsprechenden weiteren Zielnavigationszustand bereitstellt;
wobei wenigstens eine Navigationsoption der zweiten Menge von Navigationsoptionen ein Attribut andeutet, das von den Navigationsoptionen der ersten Menge von Navigationsoptionen nicht angedeutet wird und von dem System bestimmt wird zur Darstellung des ersten Zielnavigationszustands relevant zu sein aber nicht relevant zu sein für die Darstellung des Ursprungsnavigationszustands, wobei das Verfahren umfasst, dass das System bestimmt, ob eine Navigationsoption relevant oder nicht relevant ist für die Darstellung eines Navigationszustands durch Benutzung von Regeln, die von dem System in einer Informationsbank gespeichert werden.

20. Verfahren nach Anspruch 19, wobei die dargestellten Navigationsoptionen nach Attribut organisiert sind.

## Revendications

1. Système de navigation pour un ensemble de matériaux (42), le système comprenant :
une pluralité d'attributs (22) caractérisant les matériaux ;
une pluralité de valeurs (28) décrivant les matériaux, où chacune des valeurs est associée avec au moins l'un des attributs et chaque association définit une paire attribut-valeur, et où certaines paires attribut-valeur raffinent d'autres paires attribut-valeur ;
une pluralité d'états de navigation, où chaque état de navigation correspond à un ensemble particulier de paires attribut-valeur et à un sous-ensemble particulier des matériaux, où pour chaque état de navigation, le sous-ensemble particulier des matériaux correspondant à l'état de navigation est constitué des matériaux dans le système de navigation qui sont chacun décrits par chaque paire attribut-valeur dans l'ensemble particulier de paires attribut-valeur correspondant à cet état de navigation et où pour au moins un état de navigation, l'ensemble particulier de paires attribut-valeur correspondant à cet état de navigation comporte une pluralité de paires attribut-valeur qui ne se raffinent pas réciproquement ; et
une interface, l'interface étant agencée pour fournir une pluralité de transitions, chaque transition fournissant un chemin direct entre deux des états de navigation, où chaque transition représente un changement de l'ensemble de paires attribut-valeur correspondant à un état de navigation original à l'ensemble de paires attribut-valeur correspondant à un état de navigation de destination, où une série d'un ou de plusieurs transitions fournit un chemin entre deux états de navigation quelconques ;
**caractérisé en ce que** :
l'interface est agencée pour présenter un premier ensemble d'options de navigation à sélectionner pour un état de navigation original, chaque option de navigation du premier ensemble d'options de navigation indiquant un attribut respectif et fournissant une transition de l'état de navigation original à un état de navigation de destination correspondant ; et
l'interface est agencée pour présenter un deuxième ensemble d'options de navigation à sélectionner pour un premier état de navigation de destination après transition de l'état de navigation original au premier état de navigation de destination, chaque option de navigation du deuxième ensemble d'options de navigation indiquant un attribut respectif et fournissant une transition du premier état de navigation de destination à un état de navigation de destination additionnel correspondant ;
où au moins une option de navigation du deuxième ensemble d'options de navigation indique un attribut qui n'est pas indiqué par les options de navigation du premier ensemble d'options de navigation et que le système détermine comme étant approprié pour être présenté pour le premier état de navigation de destination mais comme étant inapproprié pour être présenté pour l'état de navigation original, où le système est agencé pour déterminer si une option de navigation est appropriée ou non pour être présentée pour un état de navigation conformément à des règles stockées par le système dans une base de connaissances.

2. Système de navigation de la revendication 1, dans lequel au moins l'une des transitions d'un premier état de navigation à un deuxième état de navigation représente un raffinement de la valeur de l'un de l'ensemble correspondant de paires attribut-valeur pour le premier état de navigation.

3. Système de navigation de la revendication 1, dans lequel au moins l'une des transitions d'un premier état de navigation à un deuxième état de navigation représente une généralisation de la valeur d'une paire de l'ensemble correspondant de paires attribut-valeur pour le premier état de navigation.

4. Système de navigation de la revendication 1, dans lequel au moins l'une des transitions d'un premier état de navigation à un deuxième état de navigation représente une désélection de l'attribut d'une paire de l'ensemble correspondant de paires attribut-valeur pour le premier état de navigation.

5. Système de navigation de la revendication 1, dans lequel une première des transitions d'un premier état de navigation à un deuxième état de navigation représente une sélection d'une paire attribut-valeur correspondant à un premier attribut et une deuxième des transitions du premier état de navigation à un troisième état de navigation représente une sélection d'une paire attribut-valeur correspondant à un deuxième attribut.

6. Système de navigation de la revendication 1, dans lequel au moins l'une des transitions d'un premier état de navigation à un deuxième état de navigation représente une spécification d'une paire attribut-valeur correspondant à un attribut pour lequel il n'existe pas de paire attribut-valeur correspondante dans l'ensemble de paires attribut-valeur correspondant au premier état de navigation.

7. Système de navigation de la revendication 1, dans lequel un premier état de navigation correspond uniquement à l'un des matériaux dans l'ensemble de matériaux, au moins l'une des transitions du premier état de navigation à un deuxième état de navigation représentant une sélection d'une paire attribut-valeur particulière associée au premier état de navigation.

8. Système de navigation de la revendication 1, dans lequel les valeurs associées à au moins l'un de la pluralité d'attributs sont définies explicitement.

9. Système de navigation de la revendication 1, dans lequel les valeurs associées à au moins l'un de la pluralité d'attributs sont définies implicitement.

10. Système de navigation de la revendication 1, dans lequel, pour des paires attribut-valeurs partageant un attribut commun, aucune paire attribut-valeur ne raffine une pluralité de paires attribut-valeur qui ne se raffinent pas réciproquement.

11. Système de navigation de la revendication 1, dans lequel, pour des paires attribut-valeur partageant un attribut commun, au moins une paire attribut-valeur raffine une pluralité de paires attribut-valeur qui ne se raffinent pas réciproquement.

12. Système de navigation de la revendication 1, dans lequel l'interface comporte une interface utilisateur humain.

13. Système de navigation de la revendication 1, dans lequel l'interface comporte une interface de programme applicatif.

14. Système de navigation de la revendication 1, dans lequel l'interface complète la fonctionnalité d'un programme orienté données indépendant.

15. Système de navigation de la revendication 1, dans lequel l'interface comporte un outil de recherche à contenu libre pour chercher les attributs.

16. Système de navigation de la revendication 1, dans lequel l'interface comporte un outil de recherche à contenu libre pour chercher les valeurs.

17. Système de navigation de la revendication 1, dans lequel l'interface comporte une présentation de paires attribut-valeur correspondant à un état de navigation actuel.

18. Système de navigation de la revendication 17, dans lequel la présentation de paires attribut-valeur correspond à l'état de navigation actuel comportant des paires attribut-valeur sélectionnées par un utilisateur et des paires attribut-valeur présumées, l'interface comportant une indication de paires attribut-valeur sélectionnées par un utilisateur et de paires attribut-valeur présumées.

19. Procédé pour permettre à un utilisateur de parcourir un ensemble de matériaux (42), le procédé comprenant l'utilisation d'un système de navigation pour exécuter les étapes qui consistent :
à fournir un ensemble de matériaux, une pluralité d'attributs (22) caractérisant les matériaux, une pluralité de valeurs (28) décrivant les matériaux, chacune des valeurs étant associée avec au moins l'un des attributs, chaque association définissant une paire attribut-valeur, certaines paires attribut-valeur raffinant d'autres paires attribut-valeur ;
à fournir une pluralité d'états de navigation, où chaque état de navigation correspond à un ensemble particulier de paires attribut-valeur et à un sous-ensemble particulier des matériaux, où pour chaque état de navigation, le sous-ensemble particulier des matériaux correspondant à l'état de navigation est constitué des matériaux dans le système de navigation qui sont chacun décrit par chaque paire attribut-valeur dans l'ensemble particulier de paires attribut-valeur correspondant à cet état de navigation et où pour au moins un état de navigation, l'ensemble particulier de paires attribut-valeur correspondant à cet état de navigation comporte une pluralité de paires attribut-valeur qui ne se raffinent pas réciproquement ; et
à fournir une interface, l'interface fournissant une pluralité de transitions, chaque transition fournissant un chemin direct entre deux des états de navigation, où chaque transition représente un changement de l'ensemble de paires attribut-valeur correspondant à un état de navigation original à l'ensemble de paires attribut-valeur correspondant à un état de navigation de destination, où une série d'un ou de plusieurs transitions fournit un chemin entre deux états de navigation quelconques ;
**caractérisé en ce que** le procédé comprend :
le fait que l'interface présente un premier ensemble d'options de navigation à sélectionner pour un état de navigation original, chaque option de navigation du premier ensemble d'options de navigation indiquant un attribut respectif et fournissant une transition de l'état de navigation original à un état de navigation de destination correspondant ; et
l'interface présentant un deuxième ensemble d'options de navigation à sélectionner pour un premier état de navigation de destination après transition de l'état de navigation original au premier état de navigation de destination, chaque option de navigation du deuxième ensemble d'options de navigation indiquant un attribut respectif et fournissant une transition du premier état de navigation de destination à un état de navigation de destination supplémentaire correspondant ;
où au moins une option de navigation du deuxième ensemble d'options de navigation indique un attribut qui n'est pas indiqué par les options de navigation du premier ensemble d'options de navigation et que le système détermine comme étant approprié pour être présenté pour le premier état de navigation de destination mais comme étant inapproprié pour être présenté pour l'état de navigation original, où le procédé comprend le fait que le système détermine si une option de navigation est appropriée ou non pour être présentée pour un état de navigation en utilisant des règles stockées par le système dans une base de connaissances.

20. Procédé de la revendication 19, dans lequel les options de navigation présentées sont organisées par attribut.
